# FASCICULE DE BREVET EUROPEEN

(11) **EP 2 516 886 B1**
(45) Date de publication et mention de la délivrance du brevet: **01.05.2019**
(21) Numéro de dépôt: 10794889.5
(22) Date de dépôt: 13.12.2010
(51) Int. Cl.: F16F 13/14

(54) **ELEMENT FONCTIONNEL HYDRO-ELASTIQUE ET ARTICULATION HYDRO-ELASTIQUE**
HYDROELASTISCHES FUNKTIONSELEMENT UND HYDROELASTICHES VERBINDUNGSELEMENT
HYDROELASTIC FUNCTIONAL ELEMENT AND HYDROELASTIC JOINT

(30) Priorité: 22.12.2009 FR 0959423
(43) Date de publication de la demande: 31.10.2012
(73) Titulaire: Anvis SD France SAS, 58302 Decize Cedex (FR)
(72) Inventeur: RENARD, Franck, F-58000 Saint Eloi (FR); JANDOT, Gérard, F-58000 Nevers (FR)
(74) Mandataire: Schmid, Nils T.F.
(86) Numéro de dépôt international: PCT/EP2010/007578
(87) Numéro de publication internationale: WO 2011/076352

(56) Documents cités:
- DE-A1-102007 021 628
- GB-A- 2 351 138
- JP-A- 60 168 931
- US-A1- 2002 081 050

## Description

La présente invention concerne un élément fonctionnel hydro-élastique destiné à être déposé dans une articulation hydro-élastique pour amortir des vibrations de charge entre deux pièces de structure, en particulier entre une suspension de roue et une caisse d'un véhicule, l'élément fonctionnel hydro-élastique ayant un axe longitudinal et une direction circonférentielle autour de cet axe longitudinal. En outre, la présente invention concerne une articulation hydro-élastique pour assembler deux pièces de structure, en particulier pour connecter une suspension de roue à une caisse d'un véhicule, comprenant un axe longitudinal, une armature extérieure rigide, une armature intérieure rigide et un élément fonctionnel hydro-élastique liant l'armature intérieure à l'armature extérieure en amortissant des vibrations.

En particulier, la présente invention concerne les articulations hydro-élastiques pour des automobiles ou poids lourds. Dans le cas présent elle concerne plus particulièrement les articulations, en particulier multi couches, de liaison au sol pour des véhicules roulants, les articulations devant assurer un filtre acoustique des transmissions solidiennes des vibrations. Typiquement, ces articulations doivent présenter une raideur radiale significative compte tenu des sollicitations et de leur fonction de guidage ; or, ces raideurs élevées facilitent la transmission des bruits.

Les paliers ou articulations hydro-élastiques sont connus depuis de nombreuses années. Ceux-ci sont généralement constitués d'au moins deux armatures cylindriques concentriques, l'espace annulaire entre les armatures est rempli d'élastomère, et des chambres hydrauliques reliées par des canaux sont aménagées dans cette partie en élastomère. Le liquide contenu dans ces chambres peut circuler de l'une à l'autre pour de basses fréquences d'excitation transversale, tandis qu'à partir d'une certaine fréquence une mise en résonnance bloque sa migration ce qui génère un déphasage associé à une baisse de rigidification dynamique utilisé pour filtrer certaines vibrations. Cette technique est expliquée dans divers brevets tel que le US 6 273 406.

Il existe de nombreuses variantes de formes d'articulation hydro-élastique que l'on peut classer en deux familles.

La première famille englobe les articulations hydro-élastiques qui prévoient deux chambres hydrauliques opposées à 180° selon une direction radiale préférentielle correspondant à la direction d'excitation principale, ou quatre chambres hydrauliques opposées deux par deux selon deux directions radiales orthogonales entre elles. C'est le cas des demandes de brevet EP 1 348 885 et FR 2817007 par exemple.

La deuxième famille englobe les articulations hydro-élastiques qui sont conçues avec une chambre hydraulique périphérique continue mais pouvant présenter localement des zones d'étranglement dans le circuit hydraulique. C'est notamment le cas de la demande de brevet FR 2 910 577 et de la demande EP 0 410 455 par exemple.

Les variantes dans ces deux familles viennent soit des deux principes d'articulation mono ou bicouche, soit des façons dont les chambres et canaux hydrauliques sont créés, c'est-à-dire avec ou sans pièce plastique incorporée. Enfin il existe des articulations destinées à filtrer avec un effet hydraulique les excitations radiales et d'autres à filtrer des excitations axiales, l'axe étant celui des armatures cylindriques de l'articulation. Quelques rares demandes prévoient de pouvoir filtrer avec un effet hydraulique à la fois en direction axiale et radiale. C'est le cas dans la demande de brevet FR 2 659 713 et dans la demande FR 2 910 577 dans certaines variantes.

La demande de brevet FR'713 prétend de prévoir avec quatre chambres hydrauliques un filtrage hydraulique dans toutes les orientations radiales. Pourtant, la décomposition des efforts qu'elle décrit ne compense pas pour le fait qu'une chambre hydraulique supportant un effort sensiblement différent d'une direction radiale ne va pas pouvoir expulser le fluide hydraulique de la même manière que si l'effort était purement radial, c'est-à-dire normal à la surface extérieure de la chambre hydraulique. De plus, malgré les quatre chambres périphériques de l'articulation divulguée dans FR'713 qui prévoit une filtration dans toutes les directions, le niveau de filtration ne sera pas constant selon la direction radiale, ce qui interdit de monter une telle articulation sans orientation angulaire particulière.

La demande de brevet FR'577 divulgue une chambre hydraulique continue et périphérique qui semble à priori idéale pour assurer une homogénéité de filtrage hydraulique dans toutes les directions radiales. Pourtant, les transferts de fluide d'une zone soumise à une excitation vers la zone diamétralement opposée ne sont vraiment contrôlables que s'il existe un rétrécissement du débit à un endroit donné, comme le divulgue également la demande FR'577. Or, si l'articulation est orientée angulairement au montage telle que cette zone rétrécie se trouve directement sur l'axe radial d'excitation, l'écoulement du fluide hydraulique sera fortement contrarié, et le fluide aura tendance à être refoulé vers les deux demi-chambres qui sont de chaque côté de cette zone rétrécie, ce qui risque de créer un déphasage dès les basses fréquences par blocage du fluide hydraulique. On peut considérer la solution d'avoir une chambre hydraulique sous forme d'une couche très mince, pour éviter d'étranglements périphériques localisés, comme dans la demande FR'577, mais cette disposition est industriellement problématique compte tenu des tolérances inévitables de fabrication.

US 2002/0081050 A1 divulgue un palier d'arbre élastique adapté pour être utilisé comme un palier intermédiaire pour l'arbre de transmission d'un véhicule à moteur.

GB 2 351 138 A décrit un dispositif hydraulique pour amortir des vibrations axiales et radiales.

Donc, les conceptions antérieures des articulations hydro-élastiques requièrent une orientation spécifique au montage, soit angulaire parce qu'elles ne filtrent pas hydrauliquement de façon sensiblement constante sur toutes les directions radiales, soit axiale parce qu'elles ne peuvent pas être montées tête-bêche, soit dans les deux sens parce qu'elles ne peuvent filtrer qu'en radial ou qu'en axial.

De plus, les fréquences ou plages de fréquences à amortir d'un véhicule hybride ou électrique sont différentes aux plages de fréquences d'un véhicule seulement propulsé par un moteur à combustion. Les véhicules hybrides peuvent être propulsés en parallèle ou séquentiellement par un moteur électrique et un moteur à combustion. Par exemple, si le véhicule hybride est propulsé seulement par un moteur électrique, un conducteur peut entendre des bruits qui sont normalement masqués par le bruit ou des vibrations du moteur à combustion. Par exemple le bruit d'une boite de vitesses ou d'une transmission peut être perturbant pour un passager.

L'objet de l'invention est de mettre à la disposition un élément fonctionnel hydro-élastique et une articulation qui surmonte les inconvénients des articulations connues, en particulier une articulation qui soit simple et facile à fabriquer et à monter automatiquement.

Pour cela, l'invention fournit un élément fonctionnel hydro-élastique du type susmentionné, qui est caractérisé par au moins une rangée de chambres hydrauliques s'étendant circonférentiellement et comprenant au moins trois chambres hydrauliques et au moins une conduite d'étranglement qui permet une communication de liquide entre chaque paire de chambres hydrauliques respectives circonférentiellement adjacentes afin qu'une variation d'au moins un volume de travail des chambres hydrauliques par des vibrations de charge de travail puisse être équilibrée en permettant un écoulement d'un liquide dans au moins l'une des autres chambres hydrauliques.

Dans un mode de réalisation, l'articulation et/ou l'élément fonctionnel hydro-élastique peut être réalisé complètement symétrique et/ou peut être monté dans n'importe quel sens dans son logement, par exemple dans une douille d'un bras de suspension, sans orientation spécifique de l'axe longitudinal de l'articulation avant montage et sans orientation angulaire particulière dans un plan perpendiculaire à l'axe longitudinal. Or, la productivité au montage des articulations sur les éléments de liaisons au sol - si possible au montage automatique - est améliorée.

En outre, l'articulation d'un mode de réalisation peut assurer un filtrage hydraulique suivant l'un des quelconques axes radiaux dans le plan perpendiculaire à l'axe longitudinal. Ce filtrage hydraulique peut se faire dans le cas des articulations de liaisons au sol d'une façon sensiblement égale dans toutes les directions radiales si on veut monter l'articulation sans orientation angulaire particulière.

Par exemple, l'articulation et/ou l'élément fonctionnel hydro-élastique avec plusieurs couches d'élastomère séparées par une ou plusieurs armatures intermédiaires combine à la fois la possibilité de monter l'articulation sans orientation angulaire particulière dans son logement et dans n'importe quel sens sur l'axe du logement à recevoir, la filtration hydraulique sensiblement constante en radial quelque soit la direction radiale de l'excitation, un trajet d'expulsion du fluide hydraulique réduit, et enfin la possibilité optionnelle, dans un mode de réalisation, de filtration hydraulique axiale.

Dans un mode de réalisation, l'armature extérieure, intermédiaire et/ou intérieure sont plus raides que les corps élastiques de l'ensemble élastique et de l'élément fonctionnel hydro-élastique. Par exemple, les armatures extérieure et/ou intérieure peuvent être fabriquées en métal.

Par exemple, dans un mode de réalisation, au moins l'une des rangées de chambres hydrauliques comprend plus de trois, quatre, cinq, six, sept, huit, douze, 16 ou 24 chambres hydrauliques, en particulier exactement quatre, cinq, six, sept, huit, douze, seize ou 24 chambres hydrauliques.

Selon un mode de réalisation, au moins deux chambres hydrauliques tous les 90° maximum de secteur angulaire peuvent être nécessaires, soit au moins 8 chambres hydrauliques périphériques. Dans un autre mode de réalisation 10 à 12 chambres hydrauliques et/ou chambres partielles par rangée circonférentielle sont arrangées l'une à côté de l'autre dans l'élément fonctionnel hydro-élastique, par exemple en cas de deux rangées circonférentielles 20 à 24 chambres hydrauliques et/ou chambres partielles, ou même plus si le périmètre de l'articulation le permet.

Dans un mode de réalisation, l'élément fonctionnel hydro-élastique limite moins de 48 chambres hydrauliques, en particulier moins de 30 chambres hydrauliques, arrangées en particulier sur une rangée circonférentielle.

Dans un mode de réalisation, chaque chambre hydraulique d'une rangée de chambres hydrauliques a une largeur angulaire ou circonférentielle inférieure ou égale à environ 45 degrés, par exemple moins de 30 degrés environ, en particulier entre 10 et 30 degrés.

Dans un autre mode de réalisation, les chambres hydrauliques de l'au moins une rangée de chambres hydrauliques couvrent au moins 50 pourcent, en particulier au moins 70 pourcent, d'une surface circonférentielle de l'élément fonctionnel hydro-élastique entre ses deux extrémités axiales.

Par exemple, dans un mode de réalisation, les chambres hydrauliques ont une extension radiale moyenne entre 2 et 10 mm, en particulier entre 3 et 5 mm.

L'articulation peut être caractérisée en ce que les chambres hydrauliques de l'au moins une rangée de chambres hydrauliques ont une extension radiale moyenne entre 10 et 60 pourcent de l'extension radiale maximale de l'élément fonctionnel hydro-élastique, en particulier entre 20 et 50 pourcent.

Plus les chambres hydrauliques seront petites plus le liquide qu'elles contiennent pourra facilement être expulsé par un orifice ou une ouverture calibré(e), le trajet d'expulsion étant réduit, et plus on aura un nombre important de chambres hydrauliques côte à côte formant une couche périphérique de surface significative sans avoir les inconvénients des solutions ne disposant que d'une ou deux couches minces périphériques.

Dans un autre mode de réalisation, les chambres hydrauliques de l'au moins une rangée de chambres hydrauliques sont sensiblement identiques.

Dans un mode de réalisation, les chambres hydrauliques de l'au moins une rangée circonférentielle sont sensiblement rectangulaires vue de côté, prise de façon radiale, et ont, en particulier, une extension radiale et une extension circonférentielle sensiblement identiques.

Dans un autre mode de réalisation, l'élément fonctionnel hydro-élastique peut être caractérisé en ce que les chambres hydrauliques sont limitées circonférentiellement par des parois axiales s'étendant en direction axiale et/ou sont limitées en direction axiale par des parois circonférentielles s'étendant en direction circonférentielle, les parois axiales et/ou les parois circonférentielles étant formées par l'élément fonctionnel hydro-élastique.

Dans un mode de réalisation, les parois axiales ont une largeur circonférentielle entre 1/20 et 1/5, en particulier autour d'un dixième, de l'extension circonférentielle d'une chambre hydraulique d'une rangée de chambres hydrauliques.

Dans un mode de réalisation, le rapport entre l'extension axiale des chambres hydrauliques et l'extension axiale des conduites d'étranglement est au moins 5, en particulier au moins 10, pour produire un effet d'étranglement. Par exemple le rapport de l'extension axiale de l'au moins une chambre hydraulique à l'extension axiale de l'au moins une conduite d'étranglement est au moins 15.

Dans un mode de réalisation, l'au moins une conduite d'étranglement est ouverte en permanence sous vibrations de charge.

Par exemple, dans un mode de réalisation, au moins une conduite d'étranglement débouche dans au moins l'une des parois axiales, en particulier à au moins l'une des transitions entre une paroi axiale et une paroi circonférentielle.

Dans un autre mode de réalisation, des conduites d'étranglement débouchent dans les deux parois axiales de chaque chambre hydraulique de la même rangée de chambres hydrauliques, en particulier respectivement à une transition entre la paroi axiale respective et la même paroi circonférentielle, ou dans chaque chambre hydraulique de la même rangée de chambres hydrauliques une première conduite d'étranglement débouche dans la première paroi axiale à une transition entre la première paroi axiale et une première paroi circonférentielle et une deuxième conduite d'étranglement débouche dans la deuxième paroi axiale à une transition entre la deuxième paroi axiale et une deuxième paroi circonférentielle.

Selon l'invention, un système de conduites d'étranglement est formé de manière que les conduites d'étranglement connectent hydrauliquement en série les chambres hydrauliques d'une rangée de chambres hydrauliques.

Dans un mode de réalisation, un système de conduites d'étranglement comprenant au moins une conduite d'étranglement est formé de manière à ce qu'un liquide expulsé d'une chambre hydraulique puisse être introduit dans n'importe quelle chambre hydraulique sans passer par une autre chambre hydraulique intermédiaire, en particulier de la même rangée de chambres hydrauliques. Un filtrage hydraulique d'un effort en direction radiale de l'articulation peut donc être effectué.

Dans un mode de réalisation, des orifices complémentaires ou latéraux d'échappement du liquide hydraulique vis-à-vis des sollicitations radiales sont prévus, et ces orifices sont disposés de façon aligné soit au minimum à une extrémité de chaque chambre hydraulique, soit au milieu des parois des chambres, soit de façon non aligné en disposant ces orifices en quinconce.

Dans un autre mode de réalisation, l'élément fonctionnel hydro-élastique comprend ou est constitué d'un corps élastique.

Selon l'invention, l'articulation peut être caractérisée en ce que l'élément fonctionnel hydro-élastique comprend au moins deux rangées de chambres hydrauliques superposées en direction axiale, en particulier une première rangée et une deuxième rangée.

Dans un mode de réalisation le nombre des chambres hydrauliques de chaque rangée hydraulique est égal. Dans un autre mode de réalisation, le nombre des chambres hydrauliques de la première rangée correspond au nombre des chambres hydrauliques de la deuxième rangée.

Dans un mode de réalisation, une conduite d'étranglement est formée entre les deux rangées de chambres hydrauliques et est séparée des chambres hydrauliques de la première rangée par une première paroi circonférentielle et/ou des chambres hydrauliques de la deuxième rangée par une deuxième paroi circonférentielle.

Selon l'invention, les chambres hydrauliques de la première rangée et de la deuxième rangée sont en communication de liquide entre eux pour permettre un filtrage hydraulique en direction de l'axe longitudinal.

Par exemple, dans un mode de réalisation, les premières parois circonférentielles et/ou les deuxièmes parois circonférentielles ont au moins une ouverture axiale, en particulier l'au moins une ouverture axiale dans une première paroi circonférentielle étant en face de l'au moins une ouverture axiale dans une deuxième paroi circonférentielle axialement adjacente à la première paroi circonférentielle.

Dans un mode de réalisation, les chambres hydrauliques de la première rangée et de la deuxième rangée sont symétriques par rapport à un plan orthogonal à l'axe longitudinal entre la première et la deuxième rangée.

Dans un autre mode de réalisation, les ouvertures axiales ont une largeur circonférentielle qui correspond à l'orifice calibré nécessaire pour la filtration hydraulique selon l'axe longitudinal. Par exemple, dans un mode de réalisation, les ouvertures sont elles-mêmes bordées par des petits bouts de parois d'ouverture alignés suivant la direction axiale. Par exemples, les parois d'ouverture peuvent être formées dans le corps élastique de l'élément fonctionnel hydro-élastique.

Dans un autre mode de réalisation, chaque chambre hydraulique a un profil radial ayant un plan de référence circonférentiel qui est défini par une surface périphérique cylindrique de l'élément fonctionnel hydro-élastique, et le profil radial comprend une zone de butoir ayant une première profondeur par rapport au plan de référence et au moins une dépression, en particulier sous forme d'une rainure, entre la zone de butoir et au moins l'une des parois axiales et/ou circonférentielles de la chambre hydraulique, la dépression ayant une profondeur supérieure à la zone de butoir.

Dans un mode de réalisation, chaque chambre hydraulique comprend une zone de butoir formant une butée radiale et/ou un piston d'évacuation. Par exemple, au sein de chaque chambre hydraulique ou chaque chambre partielle est disposée une butée radiale en élastomère pour forcer et faciliter l'écoulement du fluide hydraulique contenu dans lesdites chambres.

Dans un autre mode de réalisation, la zone de butoir est bordée de chaque côté d'une dépression.

Dans un mode de réalisation, une partie d'une d'au moins une dépression ou rainure s'étend circonférentiellement en prolongement des conduites d'étranglement. Dans un mode de réalisation, la partie de la dépression ou de la rainure en prolongement des ouvertures latérales est située le long des arêtes ou parois circonférentielles qui délimitent respectivement la zone couverte par les chambres.

Par exemple, dans un mode de réalisation, la zone de butoir est bordée de chaque coté d'une dépression radiale.

En outre, une dépression, rainure ou gorge est aménagée sur au moins l'un des côtés de chaque chambre pour augmenter le volume de liquide hydraulique, faciliter son échappement et augmenter l'effet de piston du fond ou de la zone de butoir de chaque chambre.

Dans un autre mode de réalisation, la zone de butoir et/ou l'au moins une dépression radiale est/sont aménagée(s) dans le corps élastique et/ou l'élément fonctionnel hydro-élastique.

Dans un mode de réalisation, l'élément fonctionnel hydro-élastique est caractérisé par au moins deux groupes de rangées de chambres hydrauliques, chaque groupe de rangées de chambres hydrauliques comprenant au moins une rangée de chambres hydrauliques, et par un système de conduites d'étranglement formé de manière à ce que les chambres hydrauliques d'un premier groupe de rangées de chambres hydrauliques sont hydrauliquement séparées des chambres hydrauliques d'un deuxième groupe de rangées de chambres hydrauliques.

Par exemple, dans un mode de réalisation, le volume de chaque chambre hydraulique d'une première rangée de chambres hydrauliques, en particulier du premier groupe de rangées de chambres hydrauliques, est supérieur au volume des chambres hydrauliques respectives d'une deuxième rangée de chambres hydrauliques, en particulier du deuxième groupe de rangées de chambres hydrauliques.

Par exemple, le volume de chaque chambre hydraulique d'une première rangée de chambres hydrauliques est au moins 1,5 fois supérieure, en particulier au moins deux fois supérieure, au volume des chambres hydrauliques respectives d'une deuxième rangée de chambres hydrauliques.

Dans un mode de réalisation, l'aire d'une coupe transversale des conduites d'étranglement, en particulier dans les parois axiales, d'une première rangée de chambres hydrauliques, en particulier du premier groupe de rangées de chambres hydrauliques, est supérieure à l'aire d'une coupe transversale des conduites d'étranglement, en particulier en direction radiale dans les parois axiales, d'une deuxième rangée de chambres hydrauliques, en particulier du deuxième groupe de rangées de chambres hydrauliques. Typiquement, la coupe transversale est orthogonale à la direction d'écoulement d'un liquide dans la conduite d'étranglement.

Par exemple l'aire d'une coupe en direction radiale des conduites d'étranglement d'une première rangée de chambres hydrauliques et au moins deux fois supérieure, en particulier au moins trois fois supérieure, à l'aire d'une coupe en direction radiale des conduites d'étranglement d'une deuxième rangée de chambres hydrauliques.

Par exemple, la dimension axiale des conduites d'étranglement dans les parois axiales d'une première rangée de chambres hydrauliques est supérieure à la dimension axiale des conduites d'étranglement dans les parois axiales d'une deuxième rangée de chambres hydrauliques.

Par exemple, dans un mode de réalisation, la fréquence d'amortissement des vibrations de charge en direction radiale d'une première rangée de chambres hydrauliques, en particulier du premier groupe de rangées de chambres hydrauliques, est inférieure à la fréquence d'amortissement des vibrations de charge en direction radiale d'une deuxième rangée de chambres hydrauliques, en particulier du deuxième groupe de rangées de chambres hydrauliques.

De plus, l'invention fournit une articulation hydro-élastique pour assembler deux pièces de structure, en particulier pour connecter une suspension de roue à une caisse d'un véhicule, comprenant un axe longitudinal, une armature extérieure rigide, une armature intérieure rigide et un élément fonctionnel hydro-élastique liant l'armature intérieure à l'armature extérieure en amortissant des vibrations selon l'un des modes de réalisation décrits dans la présente divulgation.

Dans un mode de réalisation, les chambres hydrauliques sont limitées par l'une des armatures intérieure, intermédiaire, et extérieure, et l'élément fonctionnel hydro-élastique.

Dans un mode de réalisation où les chambres hydrauliques sont limitées par l'armature extérieure ou intérieure, l'articulation est simple et facile à fabriquer et les chambres et canaux hydrauliques peuvent être situés en périphérie du corps élastique de l'ensemble de ressort hydro-élastique juste sous l'armature extérieure, sans adjonction de clip plastique supplémentaire pour ne pas renchérir le prix, et sans difficulté d'introduction du liquide hydraulique pour éviter la présence de bulles d'air dans le fluide.

Dans un mode de réalisation, au moins l'une des armatures, en particulier toutes les armatures, est ou sont une douille, en particulier une douille cylindrique.

Dans un mode de réalisation, les armatures intérieure, extérieure, et intermédiaire sont sensiblement concentriques dans l'état détendu de l'articulation.

Dans un mode de réalisation, les articulations multicouches présentent au moins 3 armatures concentriques qui délimitent ainsi deux zones annulaires d'élastomère ou plus. Ces articulations peuvent être très raides radialement (couramment entre 8000 et 30000 N/mm) mais relativement flexibles en torsion autour de leur axe longitudinal Z.

La description suivante permet d'apporter un certain nombre de précisions ou variantes aux principales caractéristiques expliquées ci-dessus, et de montrer quelques exemples de dispositifs répondant à la présente invention.
La figure 1 est une vue en perspective d'une articulation selon un mode de réalisation juste avant que le corps de l'articulation ne soit emmanché dans son enveloppe extérieure ;
La figure 2 est une vue en coupe de la figure 1 selon AA une fois le corps de l'articulation emmanché dans son enveloppe extérieure ;
La figure 3 est une vue en coupe longitudinale de l'articulation, selon BB de la figure 2 ;
La figure 4 est une vue de côté partielle, prise de façon radiale, du mode de réalisation de la figure 1 ;
La figure 5 est une vue partielle en coupe longitudinale de l'articulation d'un autre mode de réalisation d'une articulation, selon BB de la figure 2 ;
La figure 6 est une vue de côté partielle, prise de façon radiale, du mode de réalisation de la figure 5 ;
La figure 7 est une vue de côté partielle, prise de façon radiale, d'un autre mode de réalisation d'une articulation ;
La figure 8 est une vue en perspective d'une articulation selon un autre mode de réalisation ;
La figure 9 est une vue de côté partielle, prise de façon radiale, du mode de réalisation de la figure 8 ;
La figure 10 est une vue en perspective d'une articulation selon un autre mode de réalisation ;
La figure 11 est une vue de côté partielle, prise de façon radiale, du mode de réalisation de la figure 10 ; et
La figure 12 est une vue de côté partielle, prise de façon radiale, d'un autre mode de réalisation.

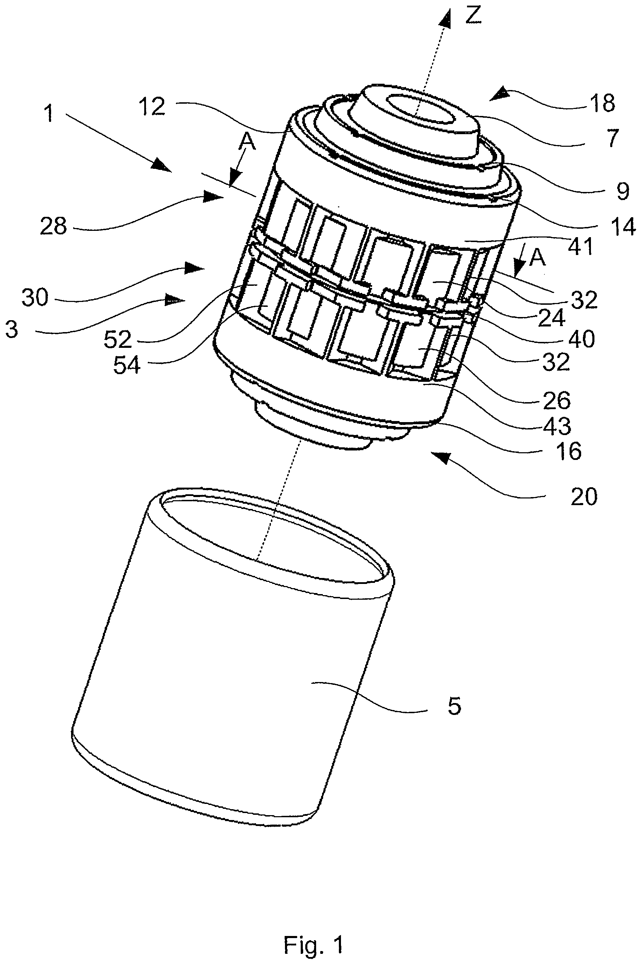

La figure 1 est une vue en perspective d'une articulation 1, selon un mode de réalisation de la présente invention. L'articulation comprend un ressort hydro-élastique ou un élément fonctionnel hydro-élastique 3 et une armature extérieure cylindrique 5. La figure montre l'armature juste avant que l'élément fonctionnel hydro-élastique 3 ne soit enfilé dans l'armature extérieure cylindrique 5. Le ressort hydro-élastique 3 présente une armature intérieure 7 et une armature intermédiaire 9. Les armatures intérieure, intermédiaire et extérieure sont sous forme d'une douille ou d'un manchon, et sont toutes les trois sensiblement cylindriques et coaxiales d'un axe longitudinal Z. Les douilles ou armatures extérieure 5 et intérieure 7 sont destinées à être fixées respectivement à deux pièces d'une structure (non représentées) pour assembler ces pièces et amortir les transmissions de vibrations entre elles. Par exemple, l'une de ces deux pièces peut être fixée dans un perçage formé dans l'armature intérieure. Le perçage est sensiblement coaxial de l'axe longitudinal Z. L'armature extérieure ou intérieure peut, par exemple, être fixée à un bras de suspension d'une liaison au sol d'un véhicule.

Dans la description, supérieur et inférieur sont définis par rapport à l'axe Z qui représente une direction. Néanmoins, l'articulation peut être sensiblement symétrique par rapport à un plan orthogonal à l'axe longitudinal.

L'élément fonctionnel hydro-élastique 3 est disposé entre la douille extérieure 5 et intérieure 7. L'élément fonctionnel hydro-élastique 3 comprend un corps élastique 12. Le corps élastique 12 comprend une armature intermédiaire 9. Dans un mode de réalisation, le corps élastique 12 peut comprendre plusieurs armatures intermédiaires 9 pour adapter la raideur en torsion et la raideur axiale de ces articulations. Le corps élastique 12 peut être un corps d'élastomère ou de caoutchouc. Le corps élastique 12 s'étend axialement entre deux extrémités qui présentent chacune une arête circulaire 14, 16, en particulier une arête supérieure 14 et une arête inférieure 16. En plus, l'articulation présente à chacune des extrémités en direction axiale des zones d'emmanchement 18, 20.

Dans la Figure 1 on voit des chambres hydrauliques 24, 26 disposées dans deux rangées circonférentielles superposées 28 et 30 en direction axiale, en particulier une rangée circonférentielle supérieure 28 et une rangée circonférentielle inférieure 30. La rangée supérieure comprend des chambres hydrauliques supérieures 24 et la rangée inférieure comprend des chambres hydrauliques inférieures 26. Les rangées circonférentielles inférieures et supérieures 28, 30 ont une conception sensiblement identique et sont symétriques par rapport à un plan entre les deux rangées, le plan étant orthogonal à l'axe longitudinal Z. Ce plan peut correspondre au plan de symétrie de l'articulation. Les chambres hydrauliques 24, 26 des deux rangées circonférentielles 28, 30 forment un maillage et couvrent ensemble, dans un mode de réalisation, au moins 70% de la périphérie de l'articulation entre les deux extrémités axiales du corps élastique 12 et/ou entre l'arête circulaire supérieure 14 et l'arête circulaire inférieure 16. Les rangées circonférentielles 28, 30 de chambres hydrauliques 24, 26 sont disposées annulairement dans le corps élastique 12 sous forme d'un anneau qui est concentrique aux armatures intérieure 7, extérieure 5 et intermédiaire 9 dans un état détendu de l'articulation 1. Typiquement, les chambres hydrauliques sont aménagées dans le corps élastique 12.

Les chambres hydrauliques 24, 26 de chaque rangée circonférentielle 28, 30 sont disposées circonférentiellement l'une à côté de l'autre. Deux chambres hydrauliques 24, 26 consécutives sur la circonférence d'une même rangée circonférentielle sont séparées par une paroi axiale 32. Dans un mode de réalisation la paroi axiale 32 peut être percée d'ouvertures latérales ou circonférentielles 38 formant ainsi des conduites d'étranglement 40. Les chambres hydrauliques de la rangée circonférentielle supérieure de chambres hydrauliques sont limitées dans la direction axiale par des parois circonférentielles supérieures 41 et des parois circonférentielles inférieures 42. Les chambres hydrauliques de la rangée circonférentielle inférieure de chambres hydrauliques sont limitées dans la direction axiale par des parois circonférentielles supérieures 44 et des parois circonférentielles inférieures 43.

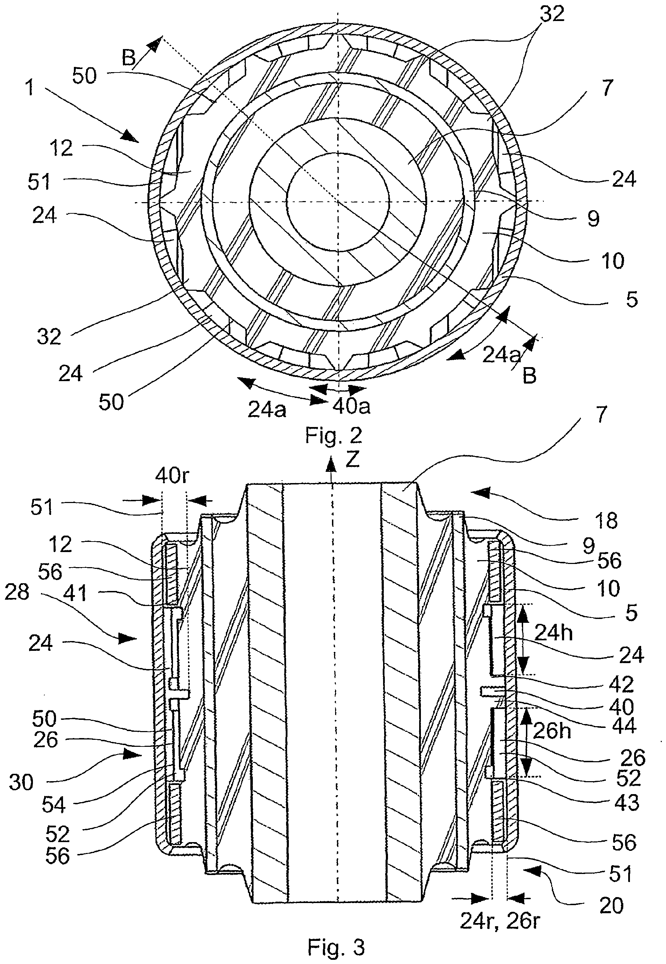

Chaque chambre hydraulique 24, 26 a une hauteur en direction axiale 24h, 26h et une largeur circonférentielle 24a, 26a. La largeur angulaire ou circonférentielle d'une chambre hydraulique de la rangée circonférentielle supérieure ou inférieure 24, 26 correspondant à la largeur circonférentielle curviligne 24a, 26a est inférieure ou égale à 45°. Dans un autre mode de réalisation la largeur angulaire est d'environ 10° à 30°. Dans ce cas il est possible de multiplier le nombre de chambres hydrauliques. Dans le cas des figures 1 et 2 l'articulation comprend 24 chambres réparties en deux rangées circonférentielles 28, 30 de 12 chambres hydrauliques 24, 26 chacune, superposées selon l'axe longitudinal Z.

Les figures 1 à 4 montrent un canal circonférentiel ou une conduite d'étranglement circonférentielle 40 qui est disposé(e) entre les deux rangées circonférentielles 28 et 30 de chambres hydrauliques 24, 26 pour l'écoulement circonférentiel d'un liquide hydraulique. Des tronçons de la conduite d'étranglement circonférentielle 40 et les chambres hydrauliques 24 adjacentes de la rangée circonférentielle supérieure 28 sont respectivement séparés par la paroi circonférentielle inférieure 42, et les tronçons du canal circonférentiel 40 et les chambres hydrauliques 26 adjacentes de la rangée circonférentielle inférieure 30 sont séparées par la paroi circonférentielle supérieure 44 des chambres hydrauliques 26 respectives. Alors la conduite d'étranglement circonférentielle 40 passe par les ouvertures circonférentielles intermédiaires 38 dans les parois axiales 32 et entre les parois circonférentielles 42, 44. Le rapport entre une dimension axiale 38h des ouvertures circonférentielles intermédiaires 38 et une dimension axiale 24h, 26h des chambres hydrauliques 24, 26 est entre 1/10 et 1/30, par exemple entre 1/15 et 1/25. Or, la dimension axiale 38h des ouvertures circonférentielles intermédiaires ou une largeur en direction axiale de la conduite d'étranglement circonférentielle 40 correspond à l'orifice calibré nécessaire pour la filtration hydraulique en direction circonférentielle. La conduite d'étranglement circonférentielle 40 a typiquement une extension radiale 40r qui est plus importante que l'extension radiale d'une chambre hydraulique 24r, 26r.

Une ouverture axiale 46, 48 est formée au milieu de la paroi circonférentielle supérieure 44 des chambres 26 de la rangée circonférentielle inférieure de chambres hydrauliques 30 et au milieu de la paroi circonférentielle inférieure 42 des chambres 24 de la rangée circonférentielle supérieure de chambres hydrauliques 28 séparant respectivement une chambre hydraulique 24, 26 de la conduite d'étranglement circonférentielle 40, l'ouverture axiale 46, 48 ayant une largeur circonférentielle 46a, 48a. Entre les ouvertures axiales 46, 48 de deux chambres hydrauliques circonférentiellement adjacentes, le tronçon de la conduite d'étranglement circonférentielle respectif a une longueur 40a en direction circonférentielle. En outre, les ouvertures axiales 46, 48 des chambres hydrauliques 24, 26 axialement adjacentes sont en regard l'une de l'autre. La largeur circonférentielle 46a, 48a correspond à l'orifice calibré nécessaire pour la filtration hydraulique selon l'axe longitudinal Z entre deux chambres hydrauliques 24, 26 superposées ou axialement adjacentes. Par exemple, dans un mode de réalisation la largeur 46a, 48a peut être 1/10 à 1/3 de la longueur circonférentielle de la paroi supérieure ou inférieure 42, 44 de la chambre hydraulique respective.

Les chambres hydrauliques 24, 26 sont délimitées dans une direction axiale par les parois circonférentielles supérieures ou inférieures 41, 42, 43, 44 et circonférentiellement par les parois axiales 32. L'armature extérieure 5 ferme la périphérie des chambres hydrauliques 24, 26 et maintient le liquide hydraulique dans ces chambres hydrauliques. Alors, en direction radiale les chambres hydrauliques 24, 26 sont délimitées par l'armature extérieure 5 et un fond 50 formé par le corps élastique 12. Or, l'articulation présente sur sa périphérie juste sous son armature extérieure les chambres hydrauliques 24, 26. Par rapport à l'extrémité radiale d'une part du corps élastique 12 entre les rangées circonférentielles 28, 30 de chambres hydrauliques et les arêtes circulaires inférieure et supérieure 14, 16 ou la surface intérieure de l'armature extérieure 5 le fond 50 a une profondeur moyenne en direction radiale entre 3 et 5 mm dans un mode de réalisation.

Chaque chambre hydraulique a un profil radial. Le profil radial a un plan de référence circonférentiel 51 étant défini par une surface périphérique cylindrique de l'élément fonctionnel hydro-élastique 3. L'extrémité radiale du corps élastique 12 entre les rangées circonférentielles 28, 30 et les arêtes circulaires inférieures et supérieures peut être située dans ce plan de référence. Le plan de référence 51 peut correspondre à la surface intérieure de l'armature extérieure 5. Le fond 50, en particulier en regard de l'armature extérieure 5, de chaque chambre hydraulique 24, 26 comprend au moins sur un de ses quatre côtés une zone de bordure ou une dépression 52 plus profonde par rapport à une partie centrale ou une zone de butoir 54 du fond 50 de la chambre hydraulique 24, 26 respective. Or la dépression 52 a une profondeur plus importante que la zone de butoir 54 par rapport au plan de référence. Dans un mode de réalisation, cette dépression est arrangée au quatre côtés de la chambre hydraulique 24, 26 dans le cas d'une chambre hydraulique sensiblement rectangulaire. Dans un autre mode de réalisation, chaque chambre hydraulique comprend une dépression sous forme d'une rainure circonférentielle à l'une de ses extrémités axiales, en particulier aux extrémités axiales de la chambre hydraulique 24, 26.

La figure 2 est une vue en coupe de la figure 1 selon AA, cette ligne symbolisant la trace laissée par un plan perpendiculaire à Z et passant par le milieu de la rangée 28 de chambres hydrauliques 24. Cette vue en coupe est orientée vers le milieu de l'articulation 1 ce qui permet de montrer en arrière plan la longueur circonférentielle 40a des tronçons de la conduite d'étranglement circonférentielle 40 entre deux ouvertures axiales et la largeur circonférentielle 46a, 48a des ouvertures axiales dans les parois inférieures ou supérieurs 46, 48 ou la distance entre deux tronçons de la conduite d'étranglement circonférentielle 40 consécutifs en circonférence. Sur la figure 2 on retrouve aussi la largeur 24a, 26a circonférentielle d'une chambre hydraulique 24, 26.

La figure 2 montre 12 chambres hydrauliques 1 côte à côte, séparée les unes des autres par la paroi axiale 32 respective en élastomère. Les 12 chambres hydrauliques 24 forment la rangée circonférentielle supérieure 28 de chambres hydrauliques 24 de la figure 1. Dans un autre mode de réalisation l'articulation peut présenter aussi un nombre de chambres hydrauliques différent. Par exemple, dans un mode de réalisation l'articulation peut présenter dans une rangée circonférentielle au moins huit chambres hydrauliques de forme sensiblement identique.

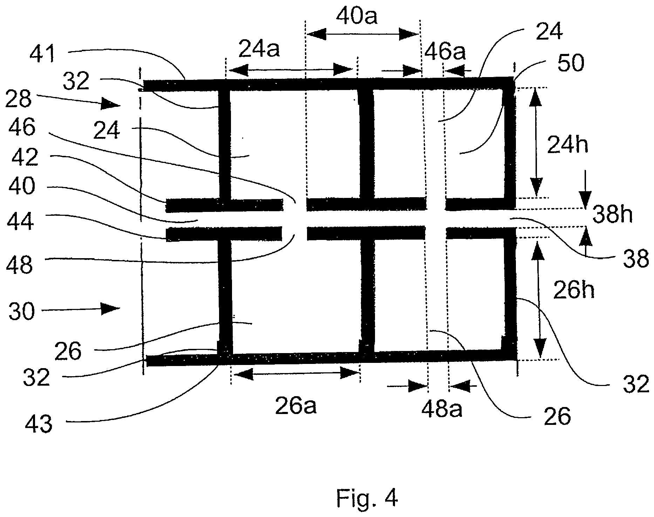

La figure 3 est une vue en coupe longitudinale selon BB de la figure 2, et la figure 4 est une vue de côté partielle, prise de façon radiale, d'un mode de réalisation d'une articulation sans son armature extérieure 5.

Dans la partie droite de la figure 3, la coupe traverse la conduite d'étranglement circonférentielle 40 de communication périphérique entre chambres hydrauliques, tandis que dans la partie gauche de cette figure la coupe passe par les ouvertures axiales 46, 48 de communication de largeur 46a, 48a dans les parois circonférentielles supérieure et inférieure 42, 44 respectives (figurant sur la figure 2 et 4) entre deux chambres hydrauliques superposées ou axialement adjacentes, ce qui donne dans un mode de réalisation une surface de fond 50 continue pour les deux chambres hydrauliques 24, 26 superposées. Chaque tronçon de la conduite d'étranglement circonférentielle 40 est délimité et encadré par les parois circonférentielles supérieures 44 des chambres de la rangée circonférentielle inférieure et les parois circonférentielles inférieures 42 des chambres de la rangée circonférentielle supérieure parallèles qui ménagent entre elles un espace correspondant à l'orifice calibré nécessaire pour le filtrage hydraulique radial (écoulement périphérique).

Sur la figure 4 on voit en outre que chaque chambre est bordée sur au moins un côté, en particulier sur tous les côtés, par une dépression plus profonde 52 par rapport a la zone de butoir 54 située entre cette zone de butoir 54 et les parois axiales 32 de la chambre hydraulique 26. Les parois supérieures et inférieures 42 et 44 définissant les tronçons de la conduite d'étranglement circonférentielle 40 servant de communication circonférentielle du liquide hydraulique ont une longueur telle que la distance entre deux tronçons de la conduite d'étranglement circonférentielle consécutifs laisse un jeu 46a, 48a qui correspond au calibrage nécessaire de l'orifice laissant passer le liquide hydraulique selon l'axe longitudinal Z.

Dans un mode de réalisation, la zone de butoir 54 de chaque chambre hydraulique sert de butée lors d'une déformation transversale ou radiale importante de l'articulation grâce à sa surface extérieure en direction radiale. En outre, la zone de butoir 54 sert comme petit piston pour faciliter l'expulsion du liquide hydraulique par les conduites d'étranglement circonférentielles 40, ce qui serait difficile à faire avec une chambre hydraulique mince de grande dimension.

Des bagues ou morceaux d'armature périphérique 56 sont noyé(e)s dans la périphérie du corps élastique 12 entre les rangées circonférentielles 28, 30 de chambres hydrauliques supérieures et inférieures 24, 26 et les arêtes 14, 16 respectives du corps élastique 12 du ressort hydro-élastique. Or, entre ces bagues 56 ou morceaux d'armature extérieure 5 est située une partie de la périphérie du corps élastique 12 qui délimite les chambres hydrauliques 24, 26. Les bagues 56 ont une forme cylindrique concentrique avec l'armature ou douille extérieure et sont situées aux deux extrémités de l'articulation juste avant les zones d'extrémité coniques. Les bagues 56 peuvent renforcer la résistance radiale des articulations. Les bagues sont alignées sur le bord des arêtes circulaires 14 et 16 respectivement. Dans un autre mode de réalisation, les bagues 56 peuvent être arrangées en butant contre l'armature extérieure 5. Dans la figure 3 elles sont représentées noyées dans le corps élastique ou caoutchouc 12, et il y a donc un fin voile de caoutchouc ou d'élastomère entre la surface extérieure de ces bagues 56 et l'alésage ou la surface intérieure de l'armature extérieure 5.

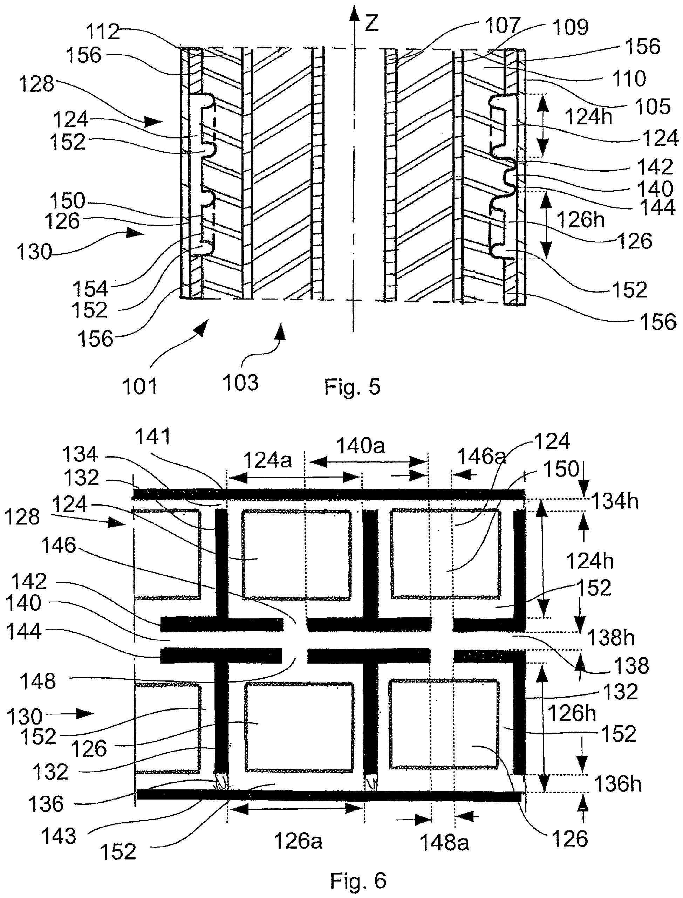

La figure 5 est une vue en coupe longitudinale selon BB de la figure 2 dans un autre mode de réalisation. Les mêmes signes de référence désignent les mêmes éléments de l'articulation avec un rajout de 100. Les zones d'emmanchement, par exemple celles de la figure 1, ne sont pas représentées dans cette coupe longitudinale qui se limite à la partie cylindrique de l'articulation située entre l'arête supérieure et l'arête inférieure. La dépression 152 plus profonde par rapport à la zone de butoir borde ici les quatre côtés de la périphérie de chaque chambre hydraulique 124, 126. Cette variante permet de renforcer l'effet de piston du fond 150 de chaque chambre hydraulique 124, 126 et augmente la possibilité de débit hydraulique.

La figure 6 est une vue de côté partielle, prise de façon radiale, d'un mode de réalisation d'une articulation sans son armature extérieure 105. Les parois axiales 132 ne ferment pas complètement chaque chambre hydraulique en direction circonférentielle. Les parois axiales 132 présentent des orifices 134, 136, en particulier à une transition entre les parois axiales 132 et les parois circonférentielles supérieures 141 dans les chambres hydrauliques 124 de la rangée circonférentielle supérieure 128 et à une transition entre les parois axiales 132 et les parois circonférentielles inférieures 143 dans les chambres hydrauliques 126 de la rangée circonférentielle inférieure 130. Les orifices ou ouvertures latérales supérieures et inférieures 134, 136 formant des conduites d'étranglement augmentent les possibilités de débit hydraulique périphérique lors d'une excitation radiale. Un rapport d'une dimension axiale 134h, 136h des ouvertures latérales supérieures et inférieures 134, 136 et une dimension axiale 124h, 126h des chambres hydrauliques 124, 126 est entre 1/5 et 1/25, par exemple entre 1/10 et 1/20. Or, la dimension axiale 134h, 136h, 138h des ouvertures latérales intermédiaires, supérieures et inférieures correspond à l'orifice calibré nécessaire pour la filtration hydraulique en direction circonférentielle. Les dépressions 152 situées à côté de la paroi circonférentielle supérieure 141 des chambres hydrauliques 124 de la rangée circonférentielle supérieure 128 ou situées à coté de la paroi circonférentielle inférieure 143 des chambres hydrauliques 126 de la rangée circonférentielle inférieure 130 de chambres hydrauliques peuvent être continues passant d'une chambre hydraulique à une autre chambre hydraulique circonférentiellement adjacentes. Alors, ces dépressions 152 à l'extrémité inférieure des chambres hydrauliques de la rangée inférieure et à l'extrémité supérieure des chambres hydrauliques de la rangée supérieure forment respectivement un canal circonférentiel supplémentaire à la conduite d'étranglement circonférentielle 140.

Dans un mode de réalisation, chaque chambre hydraulique 124, 126, de largeur 124a, 126a et de hauteur 124h, 126h, comporte une zone de butoir 154 entourée sur ses quatre côtés par une dépression 152 un peu plus profonde par rapport au plan de référence par rapport à la partie centrale 154.

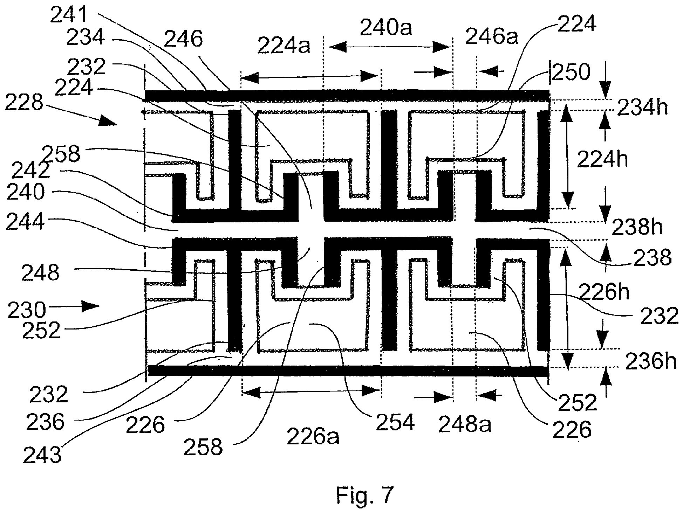

La figure 7 est une vue de côté partielle, prise de façon radiale, d'un autre mode de réalisation d'une articulation sans son armature extérieure. Le mode de réalisation de la figure 7 est une variante du mode de réalisation des figures 5 et 6. Les mêmes signes de référence désignent les mêmes éléments de l'articulation que dans les modes de réalisation de la figure 1 avec un rajout de 200. Dans le mode de réalisation de la figure 7 les ouvertures axiales 246, 248 formant des conduites d'étranglement des chambres hydraulique 224, 226 vers la conduite d'étranglement circonférentielle 240, alors dans le sens de l'axe longitudinal Z, disposent sur chaque côté une paroi d'ouverture 258 qui s'étend de la conduite d'étranglement circonférentielle 240 vers le centre des chambres hydrauliques respectives. Les parois d'ouverture 258 ont une longueur en direction axiale, d'un quart à un tiers de l'extension axiale d'une chambre hydraulique 224, 226. Les ouvertures sont destinées à laisser passer le fluide hydraulique lors d'une excitation selon l'axe Z.

Dans les figures les parois axiales 232, les parois d'ouverture 258, et les parois circonférentielles inférieures et supérieures 241, 242, 243 et 244 ont été dessinés en traits épais pour les distinguer des dépressions 252 qui sont arrangées en périphérie de chaque chambre hydraulique.

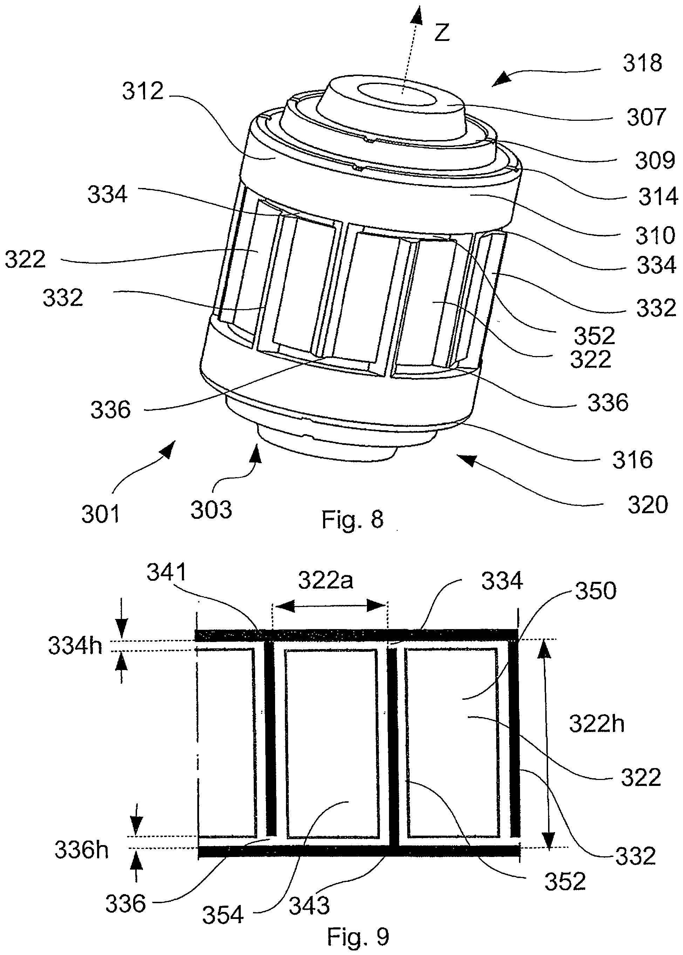

La figure 8 montre en perspective un autre mode de réalisation d'une articulation 301 sans l'armature extérieure, et la figure 9 montre une vue de côté partielle, prise de façon radiale de l'articulation 301. Les mêmes signes de référence désignent les mêmes éléments de l'articulation que dans les modes de réalisation de la figure 1 avec un rajout de 300. L'articulation 301 comprend une seule rangée circonférentielle de chambres hydrauliques 322 et des ouvertures latérales 334, 336 de communication entre chambres hydrauliques 322 formant des conduites d'étranglement sont disposée dans les parois axiales 332. Les ouvertures latérales ou circonférentielles 334, 336 sont mises en quinconce. Supérieur et inférieur sont définis par rapport à la direction axiale Z. Les ouvertures 334, 336 dans les parois axiales 332 consécutives sont formées en alternance à une transition entre la paroi axiale 332 et la paroi circonférentielle inférieure 343 et à une transition entre la paroi axiale 332 et la paroi circonférentielle supérieure 341. Alors, du côté supérieur de la paroi axiale 332 d'une chambre hydraulique on trouve donc tantôt une ouverture 334 tantôt un bout de la paroi 332 fermé. Du côté inférieur suivant la direction axiale Z on trouve une alternance d'ouvertures 336 et de bouts de paroi 332 fermés. Lors d'une excitation radiale le fluide doit migrer de façon circonférentielle et doit faire des zigzags par les ouvertures 334 et 336.

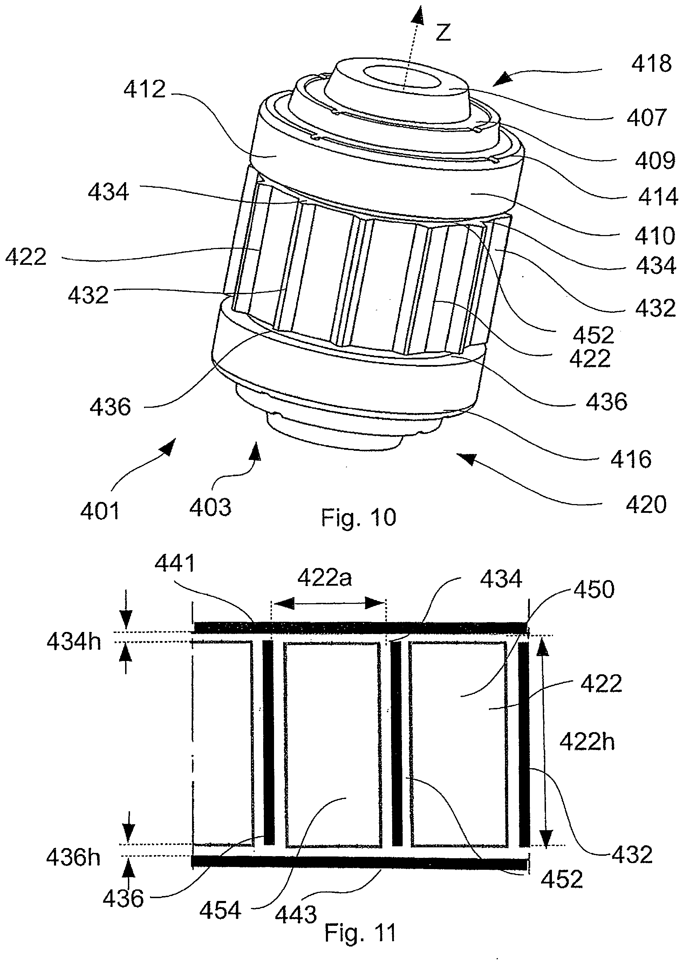

La figure 10 montre en vue de perspective un autre mode de réalisation d'une articulation 401 sans l'armature extérieure, et la figure 11 montre une vue de côté partielle, prise de façon radiale de l'articulation 401. Les mêmes signes de référence désignent les mêmes éléments de l'articulation que dans les modes de réalisation de la figure 1 avec un rajout de 400. L'articulation 401 comprend une seule rangée circonférentielle de chambres hydrauliques 422, mais des ouvertures 434, 436 de communication entre les chambres hydrauliques forment des conduites d'étranglement aux deux extrémités des chambres ou aux deux transitions entre la paroi axiale 432 et les parois circonférentielles supérieures et inférieures 441, 443. Chaque paroi 432 entre deux chambres hydrauliques présente une petite ouverture à ses deux extrémités axiales. Le mode de réalisation des figures 10 et 11 est une variante du mode de réalisation des figures 8 et 9 mais avec une disposition différente des conduites d'étranglement de circulation du fluide hydraulique.

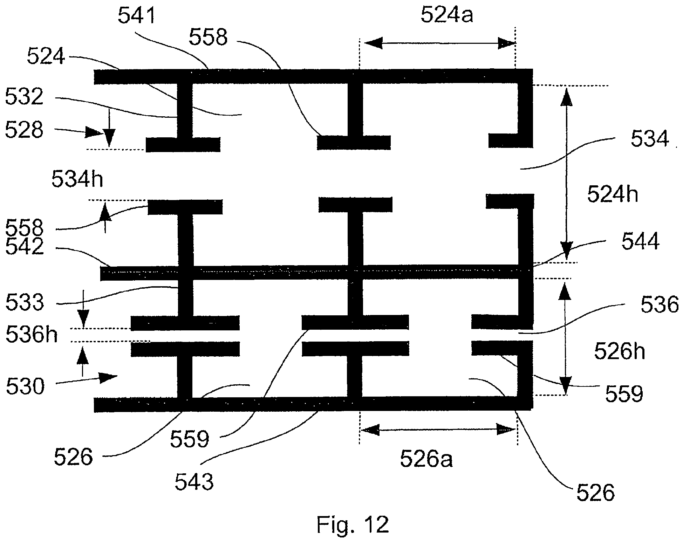

La figure 12 est une vue de côté partielle, prise de façon radiale, d'un autre mode de réalisation d'une articulation sans son armature extérieure. Le mode de réalisation de la figure 12 est une variante du mode de réalisation des figures 5 et 6. Les mêmes signes de référence désignent les mêmes éléments de l'articulation que dans les modes de réalisation de la figure 1 avec un rajout de 500. Le mode de réalisation de la figure 12 comprend deux rangées de chambres hydrauliques ou rangées circonférentielles, en particulier une première rangée 528 de chambres hydrauliques 524 et une deuxième rangée 530 de chambres hydrauliques 526 qui s'étendent en direction circonférentielle. Dans un mode de réalisation, le volume de chaque chambre hydraulique 524 de la première rangée 528 des chambres hydrauliques est diffèrent du volume des chambres hydrauliques 526 respectives de la deuxième rangée 530 des chambres hydrauliques. Par exemple, la surface des chambres hydrauliques 524 de la première rangée 528 de chambres hydrauliques est plus grande par rapport à la surface des chambres hydrauliques 526 de la deuxième rangée 530 de chambres hydrauliques dans une vue de côté, prise de façon radiale. Dans un mode de réalisation, l'extension circonférentielle 524a, 526a respective des chambres hydrauliques 524, 526 de la première rangée de chambres hydrauliques 528 et de la deuxième rangée des chambres hydrauliques 530 est sensiblement égale, mais l'extension axiale 524h des chambres hydrauliques 524 de la première rangée 528 est plus grande par rapport à l'extension axiale 526h des chambres hydrauliques 526 de la deuxième rangée 530. Dans le mode de réalisation de la figure 12, le nombre des chambres hydrauliques de la première rangée 528 correspond au nombre des chambres hydrauliques de la deuxième rangée 530. Les chambres hydrauliques de la rangée circonférentielle supérieure ou de la première rangée 528 de chambres hydrauliques sont limitées en direction axiale respectivement par des parois circonférentielles supérieures 541 et des parois circonférentielles inférieures 542 en direction de la deuxième rangée des chambres hydrauliques 530. Les chambres hydrauliques de la rangée circonférentielle inférieure ou de la deuxième rangée de chambres hydrauliques 530 sont respectivement limitées en direction axiale par des parois circonférentielles supérieures 544 en direction de la première rangée 528 de chambres hydrauliques et des parois circonférentielles inférieures 543. Deux chambres hydrauliques 524, 526 consécutives sur la circonférence d'une même rangée circonférentielle sont respectivement séparées par une paroi axiale 532, 533.

Les parois axiales 532, 533 présentent des orifices 534, 536, en particulier au milieu en direction axiale des parois axiales. Les orifices ou ouvertures latérales 534, 536 de la première rangée 528 et de la deuxième rangée 530 forment des conduites d'étranglement et ont respectivement une dimension axiale 534h, 536h. La dimension axiale 534h des conduites d'étranglement 534 de la première rangée 528 correspond à l'orifice calibré nécessaire pour la filtration hydraulique en direction circonférentielle pour une première plage de fréquence d'une vibration de charge en direction radiale, et la dimension axiale 536h des conduites d'étranglement 536 de la deuxième rangée 530 correspond à l'orifice calibré nécessaire pour la filtration hydraulique en direction circonférentielle pour une deuxième plage de fréquence d'une vibration de charge en direction radiale. De plus, les chambres hydrauliques 524 de la première rangée de chambres hydrauliques et les chambres hydrauliques 526 de la deuxième rangée de chambres hydrauliques sont sans communication hydraulique entre elles axialement. Or, dans le mode de réalisation de la figure 12 un système de conduites d'étranglement 534, 536 est formé de manière à ce que les chambres hydrauliques 524 de la première rangée 528 de chambres hydrauliques soient hydrauliquement séparées des chambres hydrauliques 526 de la deuxième rangée 530 de chambres hydrauliques.

Par exemple, dans un mode de réalisation, la première plage de fréquence peut amortir des vibrations perceptibles d'un véhicule hybride roulant avec un moteur à combustion et la deuxième plage de fréquence peut amortir des vibrations perceptibles du véhicule hybride roulant avec un moteur électrique. Par exemple l'une des plages de fréquence peut être de 500 à 1000 Hz, lorsque l'autre plage de fréquence est de 50 à 500 Hz. Les plages de fréquence peuvent se chevaucher. Donc avec l'articulation selon le mode de réalisation de la figure 12 il est possible de générer deux creux de raideur qui permettent d'avoir une double filtration radiale à deux fréquences différentes.

Dans le mode de réalisation de la figure 12 les ouvertures latérales 534, 536 formant des conduites d'étranglement, disposent sur chaque côté une paroi d'ouverture 558, 559 qui s'étend circonférentiellement de la paroi axiale 532, 533 vers le centre de la chambre hydraulique. Les parois d'ouverture 558 des ouvertures latérales 534 de la première rangée 528 de chambres hydrauliques ont une extension circonférentielle inférieure aux parois d'ouvertures 559 des ouvertures latérales 536 de la deuxième rangée de chambres hydrauliques.

Dans un autre mode de réalisation au moins deux arrangements de chambres hydrauliques montrés dans les modes de réalisation des figures peuvent être superposés axialement. Or, l'articulation peut comprendre au moins quatre rangées de chambres hydrauliques superposées.

### Liste de signes de référence

- 1, 101, 301, 401: Articulation
- 3, 103, 303, 403: Elément fonctionnel hydro-élastique
- 5, 105: Armature extérieure
- 7, 107, 307, 407: Armature intérieure
- 9, 109, 309, 409: Armature intermédiaire
- 10, 12, 110, 112, 312, 412: Corps élastique
- 14, 314, 414: Arête supérieure
- 16, 316, 416: Arête inférieure
- 18, 20, 318, 320, 418, 420: Zone d'emmanchement
- 24, 124, 224, 524: Chambre hydraulique supérieure
- 26, 126, 226, 526: Chambre hydraulique inférieure
- 24a, 124a, 224a, 322a, 422a, 524a: Largeur d'une chambre hydraulique
- 26a, 126a, 226a, 526a: Largeur d'une chambre hydraulique
- 24h, 124h, 224h, 322h, 422h, 524h: Hauteur d'une chambre hydraulique
- 26h, 126h, 226h, 526h: Hauteur d'une chambre hydraulique
- 24r, 26r: Extension radiale d'une chambre hydraulique
- 28, 128, 228, 528: Rangée circonférentielle supérieure
- 30, 130, 230, 530: Rangée circonférentielle inférieure
- 32, 132, 232, 332, 432, 532, 533: Paroi axiale
- 38, 134, 136, 138, 234, 236, 238: Ouverture circonférentielle
- 334, 336, 434, 436, 534, 536: Ouverture circonférentielle
- 38h, 134h, 136h, 138h,234h,236h,238h: Dimension axiale de l'ouverture circonférentielle
- 334h, 336h, 434h, 436h, 534h, 536h: Dimension axiale de l'ouverture circonférentielle
- 40, 140, 240: Conduite d'étranglement circonférentielle
- 40a, 140a, 240a: Longueur circonférentielle d'un tronçon
- 40r: Extension radiale de la conduite d'étranglement circonférentielle
- 41, 141, 241, 341, 441, 541: Paroi circonférentielle supérieur
- 42, 142, 242, 342, 442, 542: Paroi circonférentielle inférieur
- 43, 143, 243, 343, 443, 543: Paroi circonférentielle inférieur
- 44, 144, 244, 344, 444, 544: Paroi circonférentielle supérieur
- 46, 48, 146, 148, 246, 248: Ouverture axiale
- 46a, 48a, 146a, 148a, 246a, 248a: Largeur circonférentielle de l'ouverture axiale
- 50, 150, 250, 350, 450: Fond
- 51: Plan de référence circonférentiel
- 52, 152, 252, 352, 452: Dépression
- 54, 154, 254, 354, 454: Zone de butoir
- 56, 156: Bague
- 258, 558, 559: Paroi d'ouverture
- 322, 422: Chambre hydraulique
- Z: Direction axiale

## Revendications

1. Elément fonctionnel hydro-élastique (3, 103, 303, 403) destiné à être déposé dans une articulation hydro-élastique (1, 101, 301, 401) pour amortir des vibrations de charge entre deux pièces de structure, en particulier une suspension de roue et une caisse d'un véhicule, l'élément fonctionnel hydro-élastique ayant un axe longitudinal (Z) et une direction circonférentielle autour de cet axe longitudinal, et où au moins une rangée de chambres hydrauliques (24, 26 124, 126, 224, 226, 322, 422, 524, 526) s'étendant circonférentiellement et comprenant au moins trois chambres hydrauliques et au moins une conduite d'étranglement (40, 38, 134, 136, 138, 140, 234, 236, 238, 240, 334, 336, 434, 436, 534, 536), dont l'au moins une conduite d'étranglement permet une communication de liquide entre chaque paire de chambres hydrauliques respectives circonférentiellement adjacentes afin qu'une variation d'au moins un volume de travail des chambres hydrauliques par des vibrations de charge puisse être équilibrée en permettant un écoulement d'un liquide dans au moins l'une des autres chambres hydrauliques, un système de conduites d'étranglement (134, 136, 234, 236, 334, 336, 434, 436, 534, 536) est formé de manière que les conduites d'étranglement connectent hydrauliquement en série les chambres hydrauliques d'une rangée de chambres hydrauliques, **caractérisé en ce que** l'élément fonctionnel hydro-élastique comprend au moins deux rangées de chambres hydrauliques superposées en direction axiale (Z), en particulier une première rangée (28, 128, 228, 528) et une deuxième rangée (30, 130, 230, 530), et les chambres hydrauliques de la première rangée (24, 124, 224) et de la deuxième rangée (26, 126, 226) sont en communication de liquide entre elles pour permettre un filtrage hydraulique en direction de l'axe longitudinal (Z).

2. Elément fonctionnel hydro-élastique selon la revendication 1, **caractérisé en ce que** au moins l'une des rangées de chambres hydrauliques comprend plus de trois, quatre, cinq, six, sept, huit, douze, 16 ou 24 chambres hydrauliques (24, 26, 124, 126, 224, 226, 322, 422, 524, 526), en particulier exactement quatre, cinq, six, sept, huit, douze, seize ou 24 chambres hydrauliques.

3. Elément fonctionnel hydro-élastique selon la revendication 1 ou 2, **caractérisé en ce que** l'élément fonctionnel hydro-élastique limite moins de 48 chambres hydrauliques (24, 26, 124, 126, 224, 226, 322, 422, 524, 526), en particulier moins de 30 chambres hydrauliques, et/ou **en ce que** chaque chambre hydraulique (24, 26, 124, 126, 224, 226, 322, 422, 524, 526) a une largeur circonférentielle inférieure ou égale à environ 45 degrés, par exemple moins de 30 degrés environ, en particulier entre 10 et 30 degrés.

4. Elément fonctionnel hydro-élastique selon l'une des revendications précédentes, **caractérisé en ce que** les chambres hydrauliques (24, 26, 124, 126, 224, 226, 322, 422, 524, 526) ont une extension radiale moyenne entre 2 et 10 mm, en particulier entre 3 et 5 mm, et/ou **en ce que** les chambres hydrauliques sont sensiblement rectangulaires en vue de côté, prise de façon radiale.

5. Elément fonctionnel hydro-élastique selon l'une des revendications précédentes, **caractérisé en ce que** les chambres hydrauliques sont limitées circonférentiellement par des parois axiales (32, 132, 232, 332, 432, 532, 533) s'étendant en direction axiale et/ou sont limitées en direction axiale par des parois circonférentielles (41, 42, 43, 44, 141, 142, 143, 144, 241, 242, 243, 244, 341, 343, 441, 443, 541, 542, 543, 544) s'étendant en direction circonférentielle, les parois axiales et/ou les parois circonférentielles étant formées par l'élément fonctionnel hydro-élastique, et/ou **en ce que** le rapport dimensionnel entre l'extension axiale (24h, 26h, 124h, 126h, 322h, 422h, 526h) des chambres hydrauliques et l'extension axiale (38h, 134h, 136h, 138h, 234h, 236h, 238h, 334h, 336h, 434h, 436h, 536h) des conduites d'étranglement est au moins 5, en particulier au moins 10, pour produire un effet d'étranglement.

6. Elément fonctionnel hydro-élastique selon l'une des revendications précédentes, **caractérisé en ce que** l'au moins une conduite d'étranglement est en permanence ouverte sous les vibrations de charge.

7. Elément fonctionnel hydro-élastique selon l'une des revendications 5 ou 6, **caractérisé en ce qu'**au moins une conduite d'étranglement (134, 136, 234, 236, 334, 336, 434, 436, 534, 536) débouche dans au moins l'une des parois axiales, en particulier à au moins l'une des transitions entre une paroi axiale et une paroi circonférentielle, et particulièrement **en ce que** des conduites (134, 136, 234, 236, 434, 436) d'étranglement débouchent dans les deux parois axiales de chaque chambre hydraulique de la même rangée de chambres hydrauliques, en particulier respectivement à une transition entre la paroi axiale respective et la même paroi circonférentielle (141, 143, 241, 243, 441, 443), ou dans chaque chambre hydraulique de la même rangée de chambres hydrauliques une première conduite d'étranglement (334) débouche dans la première paroi axiale à une transition entre la première paroi axiale et une première paroi circonférentielle (341) et une deuxième conduite d'étranglement (336) débouche dans la deuxième paroi axiale à une transition entre la deuxième paroi axiale et une deuxième paroi circonférentielle (343).

8. Elément fonctionnel hydro-élastique selon l'une des revendications précédentes, **caractérisé en ce qu'**un système de conduites d'étranglement comprenant au moins une conduite d'étranglement (40, 140, 240) est formé de manière à ce qu'un liquide expulsé d'une chambre hydraulique puisse être introduit dans n'importe quelle chambre hydraulique sans passer par une autre chambre intermédiaire, en particulier de la même rangée de chambres hydrauliques.

9. Elément fonctionnel hydro-élastique selon l'une des revendications précédentes, **caractérisé en ce que** l'élément fonctionnel hydro-élastique est constitué d'un corps élastique (12, 112, 312, 412) et/ou **en ce qu'**une conduite d'étranglement (40, 140, 240) est formée entre deux rangées adjacentes de chambres hydrauliques et est séparée des chambres hydrauliques de la première rangée respectivement par une première paroi circonférentielle (42, 142, 242) et/ou des chambres hydrauliques de la deuxième rangée respectivement par une deuxième paroi circonférentielle (44, 144, 244).

10. Elément fonctionnel hydro-élastique selon l'une des revendications précédentes, **caractérisé en ce que** les premières parois circonférentielles et/ou les deuxièmes parois circonférentielles (42, 44, 142, 144, 242, 244) ont au moins une ouverture axiale (46, 48, 146, 148, 246, 248), en particulier l'au moins une ouverture axiale dans une première paroi circonférentielle étant en face de l'au moins une ouverture axiale dans une deuxième paroi circonférentielle axialement adjacente à la première paroi circonférentielle, et/ou **en ce que** les chambres hydrauliques de la première rangée (24, 124, 224) et de la deuxième rangée (26, 126, 226) sont symétriques par rapport à un plan orthogonal à l'axe longitudinal (Z) entre la première et la deuxième rangée.

11. Elément fonctionnel hydro-élastique selon l'une des revendications précédentes, **caractérisé en ce que** chaque chambre hydraulique a un profil radial ayant un plan de référence circonférentiel qui est défini par une surface périphérique cylindrique de l'élément fonctionnel hydro-élastique, et le profil radial comprend une zone de butoir (54, 154, 254, 354, 454) ayant une première profondeur par rapport au plan de référence et au moins une dépression (52, 152, 252, 352, 452), en particulier sous forme d'une rainure, entre la zone de butoir et au moins l'une des parois axiales et/ou circonférentielles (32, 42, 44, 132, 142, 144, 232, 242, 244, 332, 432) de la chambre hydraulique, la dépression ayant une profondeur supérieure à la zone de butoir.

12. Elément fonctionnel hydro-élastique selon la revendication 11, **caractérisé en ce que** la zone de butoir est bordée de chaque côté d'une dépression (52, 152, 252, 352, 452), particulièrement **en ce qu'**une partie d'une d'au moins une dépression ou rainure s'étend circonférentiellement en prolongement des conduites d'étranglement (134, 136, 234, 236, 334, 336, 434, 436), et/ou **en ce que** la zone de butoir et/ou l'au moins une dépression radiale est/sont aménagée(s) dans le corps élastique et/ou l'élément fonctionnel hydro-élastique.

13. Elément fonctionnel hydro-élastique selon l'une des revendications précédentes, **caractérisé par** au moins deux groupes de rangées de chambres hydrauliques, chaque groupe de rangées de chambres hydrauliques comprenant au moins une rangée de chambres hydrauliques (528, 530), et par un système de conduites d'étranglement (534, 536) formé de manière à ce que les chambres hydrauliques (524) d'un premier groupe de rangées de chambres hydrauliques sont hydrauliquement séparées des chambres hydrauliques (526) d'un deuxième groupe de rangées de chambres hydrauliques.

14. Elément fonctionnel hydro-élastique selon l'une des revendications précédentes, **caractérisé en ce que** le volume de chaque chambre hydraulique (524) d'une première rangée (528) de chambres hydrauliques, en particulier du premier groupe de rangées de chambres hydrauliques, est supérieur au volume des chambres hydrauliques (526) respectives d'une deuxième rangée (530) de chambres hydrauliques, en particulier du deuxième groupe de rangées de chambres hydrauliques, et/ou **en ce que** l'aire d'une coupe transversale des conduites d'étranglement (534), en particulier en direction radiale dans les parois axiales (532), d'une première rangée (528) de chambres hydrauliques, en particulier du premier groupe de rangées de chambres hydrauliques, est supérieure à l'aire d'une coupe transversale des conduites d'étranglement (536), en particulier en direction radiale dans les parois axiales (533), d'une deuxième rangée (530) de chambres hydrauliques, en particulier du deuxième groupe de rangées de chambres hydrauliques, et/ou **en ce que** la fréquence d'amortissement des vibrations de charge en direction radiale d'une première rangée (528) de chambres hydrauliques, en particulier du premier groupe de rangées de chambres hydrauliques, est inférieure à la fréquence d'amortissement des vibrations de charge en direction radiale d'une deuxième rangée (530) de chambres hydrauliques, en particulier du deuxième groupe de rangées de chambres hydrauliques.

15. Articulation hydro-élastique (1, 101, 301, 401) pour assembler deux pièces de structure, en particulier pour connecter une suspension de roue à une caisse d'un véhicule, comprenant un axe longitudinal (Z), une armature extérieure rigide (5, 105), une armature intérieure rigide (7, 107, 307, 407), et un élément fonctionnel hydro-élastique (3, 103, 303, 403) liant l'armature intérieure à l'armature extérieure en amortissant des vibrations selon l'une des revendications précédentes, et particulièrement en ce que les chambres hydrauliques (24, 26, 124, 126, 224, 226,322, 422, 524, 526) sont limitées par l'une des armatures intérieure ou extérieure (5, 7, 105, 107, 307, 407), et l'élément fonctionnel hydro-élastique (3, 103, 303, 403).

16. Articulation selon revendications 15, **caractérisée en ce qu'**au moins l'une des armatures (5, 7, 105, 107, 307, 407), en particulier toutes les armatures, est ou sont une douille, en particulier une douille cylindrique, et/ou **en ce que** les armatures intérieure, extérieure, et intermédiaire (5, 7, 105, 107, 307, 407) sont sensiblement concentriques dans l'état détendu.

## Patentansprüche

1. Hydroelastisches Funktionselement (3, 103, 303, 403), das dazu bestimmt ist, in einem hydroelastischen Gelenk (1, 101, 301, 401) abgelegt zu werden, um Lastschwingungen zwischen zwei Strukturteilen zu dämpfen, insbesondere einer Radaufhängung und einer Fahrzeugkarosserie, wobei das hydroelastisches Funktionselement eine Längsachse (Z) und eine umfängliche Richtung um diese Längsachse aufweist, und wobei mindestens eine Reihe hydraulischer Kammern (24, 26, 124, 126, 224, 226, 322, 422, 524, 526), die sich umfänglich erstreckt und mindestens drei hydraulische Kammern und mindestens eine Drosselleitung (40, 38, 134, 136, 138, 140, 234, 236, 238, 240, 334, 336, 434, 436, 534, 536) umfasst, von der mindestens eine Drosselleitung eine Kommunikation von Flüssigkeit zwischen jedem Paar jeweiliger benachbarter umfänglicher hydraulischer Kammern erlaubt, damit eine Variation mindestens eines Arbeitsvolumens der hydraulischen Kammern durch Lastschwingungen ausgeglichen werden kann, indem ein Abfließen einer Flüssigkeit in mindestens eine der anderen hydraulischen Kammern erlaubt wird, ein System von Drosselleitungen (134, 136, 234, 236, 334, 336, 434, 436, 534, 536) derart gebildet ist, dass die Drosselleitungen die hydraulischen Kammern einer Reihe hydraulischer Kammern in Reihe hydraulisch verbinden, **dadurch gekennzeichnet, dass** das hydroelastische Funktionselement mindestens zwei Reihen hydraulischer Kammern umfasst, die in axiale Richtung (Z) übereinander gelagert sind, insbesondere eine erste Reihe (28, 128, 228, 528) und eine zweite Reihe (30, 130, 230, 530), und die hydraulischen Kammern der ersten Reihe (24, 124, 224) und der zweiten Reihe (26, 126, 226) in Flüssigkeitskommunikation sind, um ein hydraulisches Filtern in Richtung der Längsachse (Z) zu erlauben.

2. Hydroelastisches Funktionselement nach Anspruch 1, **dadurch gekennzeichnet, dass** mindestens eine der Reihen hydraulischer Kammern drei, vier, fünf, sechs, sieben, acht, zwölf, 16 oder 24 hydraulische Kammern (24, 26, 124, 126, 224, 226, 322, 422, 524, 526) umfasst, insbesondere genau vier, fünf, sechs, sieben, acht, zwölf, sechzehn oder 24 hydraulische Kammern.

3. Hydroelastisches Funktionselement nach Anspruch 1 oder 2, **dadurch gekennzeichnet, dass** das hydroelastische Funktionselement mindestens 48 hydraulische Kammern (24, 26, 124, 126, 224, 226, 322, 422, 524, 526) abgrenzt, insbesondere weniger als 30 hydraulische Kammern und/oder dass jede hydraulische Kammer (24, 26, 124, 126, 224, 226, 322, 422, 524, 526) eine umfängliche Breite aufweist, die kleiner oder gleich etwa 45 Grad, zum Beispiel weniger als etwa 30 Grad, insbesondere zwischen 10 und 30 Grad beträgt.

4. Hydroelastisches Funktionselement nach einem der vorstehenden Ansprüche, **dadurch gekennzeichnet, dass** die hydraulischen Kammern (24, 26, 124, 126, 224, 226, 322, 422, 524, 526) eine mittlere radiale Ausdehnung zwischen 2 und 10 mm, insbesondere zwischen 3 und 5 mm aufweisen, und/oder dass die hydraulischen Kammern in Seitenansicht, radial genommen, im Wesentlichen rechteckig sind.

5. Hydroelastisches Funktionselement nach einem der vorstehenden Ansprüche, **dadurch gekennzeichnet, dass** die hydraulischen Kammern umfänglich von axialen Wänden (32, 132, 232, 332, 432, 532, 533) abgegrenzt sind, die sich in axiale Richtung erstrecken und/oder in axiale Richtung durch umfängliche Wände (41, 42, 43, 44, 141, 142, 143, 144, 241, 242, 243, 244, 341, 343, 441, 443, 541, 542, 543, 544) abgegrenzt sind, die sich in umfängliche Richtung erstrecken, wobei die axialen Wände und/oder die umfänglichen Wände durch das hydroelastische Funktionselement gebildet sind, und/oder dass das Maßverhältnis zwischen der axialen Ausdehnung (24h, 26h, 124h, 126h, 322h, 422h, 526h) der hydraulischen Kammern, und der axialen Ausdehnung (38h, 134h, 136h, 138h, 234h, 236h, 238h, 334h, 336h, 434h, 436h, 536h) der Drosselleitungen mindestens 5, insbesondere mindestens 10 beträgt, um eine Drosselwirkung zu erzeugen.

6. Hydroelastisches Funktionselement nach einem der vorstehenden Ansprüche, **dadurch gekennzeichnet, dass** die mindestens eine Drosselleitung ständig unter den Lastschwingungen offen ist.

7. Hydroelastisches Funktionselement nach einem der Ansprüche 5 oder 6, **dadurch gekennzeichnet, dass** mindestens eine Drosselleitung (134, 136, 234, 236, 334, 336, 434, 436, 534, 536) in mindestens eine der axialen Wände mündet, insbesondere an mindestens einem der Übergänge zwischen einer axialen Wand und einer umfänglichen Wand, und insbesondere dass die Drosselleitungen (134, 136, 234, 236, 434, 436) in die zwei axialen Wände jeder hydraulischen Kammer derselben Reihe hydraulischer Kammern münden, insbesondere jeweils an einem Übergang zwischen der jeweiligen axialen Wand und derselben umfänglichen Wand (141, 143, 241, 243, 441, 443), oder in jeder hydraulischen Kammer derselben Reihe hydraulischer Kammern eine erste Drosselleitung (334) in die erste axiale Wand an einem Übergang zwischen der ersten axialen Wand und einer ersten umfänglichen Wand (341) mündet, und eine zweite Drosselleitung (336) in die zweite axiale Wand an einem Übergang zwischen der zweiten axialen Wand und einer zweiten umfänglichen Wand (343) mündet.

8. Hydroelastisches Funktionselement nach einem der vorstehenden Ansprüche, **dadurch gekennzeichnet, dass** ein Drosselleitungssystem, das mindestens eine Drosselleitung (40, 140, 240) umfasst, derart gebildet ist, dass eine Flüssigkeit, die aus einer hydraulischen Kammer ausgestoßen wird, in eine beliebige hydraulische Kammer eingeführt werden kann, ohne durch eine andere Zwischenkammer insbesondere derselben Reihe hydraulischer Kammern durchzugehen.

9. Hydroelastisches Funktionselement nach einem der vorstehenden Ansprüche, **dadurch gekennzeichnet, dass** das hydroelastische Funktionselement aus einem elastischen Körper (12, 112, 312, 412) besteht, und/oder dass eine Drosselleitung (40, 140, 240) zwischen zwei benachbarten Reihen hydraulischer Kammern gebildet und von den hydraulischen Kammern der ersten Reihe jeweils durch eine erste umfängliche Wand (42, 142, 242) getrennt ist, und/oder von den hydraulischen Kammern der zweiten Reihe jeweils durch eine zweite umfängliche Wand (44, 144, 244) getrennt ist.

10. Hydroelastisches Funktionselement nach einem der vorstehenden Ansprüche, **dadurch gekennzeichnet, dass** die ersten umfänglichen Wände und/oder die zweiten umfänglichen Wände (42, 44, 142, 144, 242, 244) mindestens eine axiale Öffnung (46, 48, 146, 148, 246, 248) aufweisen, wobei insbesondere die mindestens eine axiale Öffnung in einer ersten umfänglichen Wand der mindestens einen axialen Öffnung in einer zweiten umfänglichen Wand, die axial zu der ersten umfänglichen Wand benachbart ist, gegenüberliegt, und/oder dass die hydraulischen Kammern der ersten Reihe (24, 124, 224) und der zweiten Reihe (26, 126, 226) bezüglich einer orthogonalen Ebene zu der Längsachse (Z) zwischen der ersten und der zweiten Reihe symmetrisch sind.

11. Hydroelastisches Funktionselement nach einem der vorstehenden Ansprüche, **dadurch gekennzeichnet, dass** jede hydraulische Kammer ein radiales Profil aufweist, das eine umfängliche Bezugsebene aufweist, die durch eine zylindrische umfängliche Oberfläche des hydroelastischen Funktionselements definiert ist, und das radiale Profil eine Anschlagzone (54,154, 254, 354, 454) umfasst, die eine erste Tiefe bezüglich der Bezugsebene aufweist, und mindestens eine Vertiefung (52, 152, 252, 352, 452), insbesondere in Form einer Nut, zwischen der Anschlagzone und mindestens einer der axialen und/oder umfänglichen Wände (32, 42, 44, 132, 142, 144, 232, 242, 244, 332, 432) der hydraulischen Kammer, wobei die Vertiefung eine Tiefe aufweist, die größer ist als die Anschlagzone.

12. Funktionales hydraulisches Element nach Anspruch 11, **dadurch gekennzeichnet, dass** die Anschlagzone auf jeder Seite mit einer Vertiefung (52, 152, 252, 352, 452) abgegrenzt ist, insbesondere dass sich ein Teil einer mindestens einer Vertiefung oder Nut umfänglich in Verlängerung der Drosselleitungen (134, 136, 234, 236, 334, 336, 434, 436) erstreckt, und/oder dass die Anschlagzone und/oder die mindestens eine radiale Vertiefung in dem elastischen Körper und/oder dem hydroelastischen Funktionselement eingerichtet ist/sind.

13. Hydroelastisches Funktionselement nach einem der vorstehenden Ansprüche, **gekennzeichnet durch** mindestens zwei Gruppen von Reihen hydraulischer Kammern, wobei jede Gruppe von Reihen hydraulischer Kammern mindestens eine Reihe hydraulischer Kammern (528, 530) umfasst, und durch ein System von Drosselleitungen (534, 536), das derart gebildet ist, dass die hydraulischen Kammern (524) einer ersten Gruppe von Reihen hydraulischer Kammern hydraulisch von den hydraulischen Kammern (526) einer zweiten Gruppe von Reihen hydraulischer Kammern getrennt sind.

14. Hydroelastisches Funktionselement nach einem der vorstehenden Ansprüche, **dadurch gekennzeichnet, dass** das Volumen jeder hydraulischen Kammer (524) einer ersten Reihe (528) hydraulischer Kammern, insbesondere der ersten Gruppe von Reihen hydraulischer Kammern, größer ist als das Volumen der jeweiligen hydraulischen Kammern (526) einer zweiten Reihe (530) hydraulischer Kammern, insbesondere der zweiten Gruppe von Reihen hydraulischer Kammern, und/oder dass die Fläche eines Querschnitts der Drosselleitungen (534) insbesondere in radiale Richtung in den axialen Wänden (532) einer ersten Reihe (528) hydraulischer Kammern, insbesondere der ersten Gruppe von Reihen hydraulischer Kammern größer ist als die Fläche eines Querschnitts der Drosselleitungen (536), insbesondere in radiale Richtung in den axialen Wänden (533) einer zweiten Reihe (530) hydraulischer Kammern, insbesondere der zweiten Gruppe von Reihen hydraulischer Kammern, und/oder dass die Dämpfungsfrequenz der Lastschwingungen in radiale Richtung einer ersten Reihe (528) hydraulischer Kammern, insbesondere der ersten Gruppe von Reihen hydraulischer Kammern, kleiner ist als die Dämpfungsfrequenz der Lastschwingungen in radiale Richtung einer zweiten Reihe (530) hydraulischer Kammern, insbesondere der zweiten Gruppe von Reihen hydraulischer Kammern.

15. Hydroelastisches Gelenk (1, 101, 301, 401) zum Zusammenfügen von zwei Strukturteilen, insbesondere, um eine Radaufhängung mit einer Karosserie eines Fahrzeugs zu verbinden, die eine Längsachse (Z), eine starre äußere Bewehrung (5, 105), eine starre innere Bewehrung (7, 107, 307, 407) und ein hydroelastisches Funktionselement (3, 103, 303, 403), das die innere Bewehrung mit der äußeren Bewehrung unter Dämpfen der Schwingungen nach einem der vorstehenden Ansprüche verbindet, und insbesondere dass die hydraulischen Kammern (24, 26, 124, 126, 224, 226, 322, 422, 524, 526) durch die eine der inneren oder äußeren Bewehrung (5, 7, 105, 107, 307, 407) und das hydroelastische Funktionselement (3, 103, 303, 403) begrenzt sind.

16. Gelenk nach Anspruch 15, **dadurch gekennzeichnet, dass** mindestens eine der Bewehrungen (5, 7, 105, 107, 307, 407), insbesondere alle der Bewehrungen, eine Hülse ist oder sind, insbesondere eine zylindrische Hülse, und/oder dass die innere, äußere und Zwischenbewehrung (5, 7, 105, 107, 307, 407) im entspannten Zustand im Wesentlichen konzentrisch sind.

## Claims

1. A hydroelastic functional element (3, 103, 303, 403) intended to be deposited in a hydroelastic joint (1, 101, 301, 401) for damping load vibrations between two structural parts, in particular a wheel suspension and a body of a vehicle, the hydroelastic functional element having a longitudinal axis (Z) and a circumferential direction around this longitudinal axis, and where at least one row of hydraulic chambers (24, 26, 124, 126, 224, 226, 322, 422, 524, 526) extending circumferentially and including at least three hydraulic chambers and at least one throttling duct (40, 38, 134, 136, 138, 140, 234, 236, 238, 240, 334, 336, 434, 436, 534, 536), of which the at least one throttling duct permits a communication of liquid between each pair of respective circumferentially adjacent hydraulic chambers, so that a variation of at least one working volume of the hydraulic chambers due to load vibrations can be balanced, permitting a flow of a liquid in at least one of the other hydraulic chambers, a system of throttling ducts (134, 136, 234, 236, 334, 336, 434, 436, 534, 536) is formed such that the throttling ducts connect hydraulically in series the hydraulic chambers of a row of hydraulic chambers, **characterized in that** the hydroelastic functional element includes at least two rows of hydraulic chambers superposed in axial direction (Z), in particular a first row (28, 238, 228, 528) and a second row (30, 130, 230, 530), and the hydraulic chambers of the first row (24, 124, 224) and of the second row (26, 126, 226) are in liquid communication between each other to permit a hydraulic filtering in the direction of the longitudinal axis (Z).

2. The hydroelastic functional element according to Claim 1, **characterized in that** at least one of the rows of hydraulic chambers includes more than three, four, five, six, seven, eight, twelve, 16 or 24 hydraulic chambers (24, 26, 124, 126, 224, 226, 322, 422, 524, 526), in particular exactly four, five, six, seven, eight, twelve, sixteen or 24 hydraulic chambers.

3. The hydroelastic functional element according to Claim 1 or 2, **characterized in that** the hydroelastic functional element limits less than 48 hydraulic chambers (24, 26,124, 126, 224, 226, 322, 422, 524, 526), in particular less than 30 hydraulic chambers, and/or **in that** each hydraulic chamber (24, 26, 124, 126, 224, 226, 322, 422, 524, 526) has a circumferential width less than or equal to approximately 45 degrees, for example less than 30 degrees approximately, in particular between 10 and 30 degrees.

4. The hydroelastic functional element according to one of the preceding claims, **characterized in that** the hydraulic chambers (24, 26, 124, 126, 224, 226, 322, 422, 524, 526) have a mean radial extension between 2 and 10 mm, in particular between 3 and 5 mm, and/or that the hydraulic chambers are substantially rectangular viewed from the side, taken radially.

5. The hydroelastic functional element according to one of the preceding claims, **characterized in that** the hydraulic chambers are limited circumferentially by axial walls (32, 132, 232, 332, 432, 532, 533) extending in axial direction and/or are limited in axial direction by circumferential walls (41, 42, 43, 44, 141, 142, 143,144, 241, 242, 243, 244, 341, 343, 441, 443, 541, 542, 543, 544) extending in circumferential direction, the axial walls and/or the circumferential walls being formed by the hydroelastic functional element, and/or **in that** the dimensional ratio between the axial extension (24h, 26h, 124h, 126h, 322h, 422h, 526h) of the hydraulic chambers and the axial extension (38h, 134h, 136h, 138h, 234h, 236h, 238h, 334h, 336h, 434h, 436h, 536h) of the throttling ducts is at least 5, in particular at least 10, to produce a throttling effect.

6. The hydroelastic functional element according to one of the preceding claims, **characterized in that** the at least one throttling duct is permanently open under the load vibrations.

7. The hydroelastic functional element according to one of Claims 5 or 6, **characterized in that** at least one throttling duct (134, 136, 234, 236, 334, 336, 434, 436, 534, 536) opens in at least one of the axial walls, in particular at least one of the transitions between an axial wall and a circumferential wall, and particularly **in that** the throttling ducts (134, 136, 234, 236, 434, 436) open in the two axial walls of each hydraulic chamber of the same row of hydraulic chambers, in particular respectively at a transition between the respective axial wall and the same circumferential wall (141, 143, 241, 243, 441, 443), or in each hydraulic chamber of the same row of hydraulic chambers a first throttling duct (334) opens in the first axial wall at a transition between the first axial wall and a first circumferential wall (341) and a second throttling duct (336) opens in the second axial wall at a transition between the second axial wall and a second circumferential wall (343).

8. The hydroelastic functional element according to one of the preceding claims, **characterized in that** a system of throttling ducts including at least one throttling duct (40, 140, 240) is formed such that a liquid expelled from a hydraulic chamber can be introduced in any hydraulic chamber without passing through another intermediate chamber, in particular of the same row of hydraulic chambers.

9. The hydroelastic functional element according to one of the preceding claims, **characterized in that** the hydroelastic functional element is constituted by an elastic body (12, 112, 312, 412) and/or **in that** a throttling duct (40, 140, 240) is formed between two adjacent rows of hydraulic chambers and is separated from the hydraulic chambers of the first row respectively by a first circumferential wall (42, 142, 242) and/or from the hydraulic chambers of the second row respectively by a second circumferential wall (44, 144, 244).

10. The hydroelastic functional element according to one of the preceding claims, **characterized in that** the first circumferential walls and/or the second circumferential walls (42, 44, 142, 144, 242, 244) have at least one axial opening (46, 48, 146, 148, 246, 248), in particular the at least one axial opening in a first circumferential wall being opposite the at least one axial opening in a second circumferential wall axially adjacent to the first circumferential wall, and/or **in that** the hydraulic chambers of the first row (24, 124, 224) and of the second row (26, 126, 226) are symmetrical with respect to a plane orthogonal to the longitudinal axis (Z) between the first and the second row.

11. The hydroelastic functional element according to one of the preceding claims, **characterized in that** each hydraulic chamber has a radial profile having a circumferential plane of reference which is defined by a cylindrical peripheral surface of the hydroelastic functional element, and the radial profile includes an abutment area (54,154, 254, 354, 454) having a first depth with respect to the plane of reference and at least one depression (52, 152, 252, 352, 452), in particular in the form of a groove, between the abutment area and at least one of the axial and/or circumferential walls (32, 42, 44, 132, 142, 144, 232, 242, 244, 332, 432) of the hydraulic chamber, the depression having a greater depth than the abutment area.

12. The hydroelastic functional element according to Claim 11, **characterized in that** the abutment area is bordered on each side by a depression (52, 152, 252, 352, 452) particularly **in that** a portion of at least one depression or groove extends circumferentially in extension of the throttling ducts (134, 136, 234, 236, 334, 336, 434, 436), and/or **in that** the abutment area and/or the at least one radial depression is/are arranged in the elastic body and/or the hydroelastic functional element.

13. The hydroelastic functional element according to one of the preceding claims, **characterized by** at least two groups of rows of hydraulic chambers, each group of rows of hydraulic chambers including at least one row of hydraulic chambers (528, 530), and by a system of throttling ducts (534, 536) formed such that the hydraulic chambers (524) of a first group of rows of hydraulic chambers are hydraulically separated from the hydraulic chambers (526) of a second group of rows of hydraulic chambers.

14. The hydroelastic functional element according to one of the preceding claims, **characterized in that** the volume of each hydraulic chamber (524) of a first row (528) of hydraulic chambers, in particular of the first group of rows of hydraulic chambers, is greater than the volume of the respective hydraulic chambers (526) of a second row (530) of hydraulic chambers, in particular of the second group of rows of hydraulic chambers, and/or **in that** the area of a transverse section of the throttling ducts (534), in particular in radial direction in the axial walls (532), of a first row (528) of hydraulic chambers, in particular of the first group of rows of hydraulic chambers, is greater than the area of a transverse section of the throttling ducts (536), in particular in radial direction in the axial walls (533) of a second row (530) of hydraulic chambers, in particular of the second group of rows of hydraulic chambers, and/or **in that** the damping frequency of the load vibrations in radial direction of a first row (528) of hydraulic chambers, in particular of the first group of rows of hydraulic chambers, is lower than the damping frequency of the load vibrations in radial direction of a second row (530) of hydraulic chambers, in particular of the second group of rows of hydraulic chambers.

15. A hydroelastic joint (1, 101, 301, 401) for assembling two structural parts, in particular for connecting a wheel suspension to a body of a vehicle, including a longitudinal axis (Z), a rigid external frame (5, 105), a rigid internal frame (7, 107, 307, 407), and a hydroelastic functional element (3, 103, 303, 403) linking the internal frame to the external frame, damping vibrations according to one of the preceding claims, and particularly in that the hydraulic chambers (24, 26, 124, 126, 224, 226, 322, 422, 524, 526) are limited by one of the internal or external frames (5, 7, 105, 107, 307, 407), and the hydroelastic functional element (3, 103, 303, 403).

16. The joint according to Claim 15, **characterized in that** at least one of the frames (5, 7, 105, 107, 307, 407), in particular all the frames, is or are a bush, in particular a cylindrical bush, and/or **in that** the internal, external, and intermediate frames (5, 7, 105, 107, 307, 407) are substantially concentric in relaxed state.
